(19) Europäisches Patentamt
European Patent Office
Office européen des brevets

(11) **EP 3 745 300 A1**

(12) **EUROPEAN PATENT APPLICATION**
published in accordance with Art. 153(4) EPC

(43) Date of publication:
**02.12.2020 Bulletin 2020/49**

(51) Int Cl.:
***G06K 9/00*** (2006.01)

(21) Application number: **19822360.4**

(22) Date of filing: **15.04.2019**

(86) International application number:
**PCT/CN2019/082717**

(87) International publication number:
**WO 2019/242388 (26.12.2019 Gazette 2019/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.06.2018  CN 201810644120**

(71) Applicant: **Nanjing University**
**Nanjing, Jiangsu 210023 (CN)**

(72) Inventors:
• **CHEN, Lijun**
**Nanjing, Jiangsu 210023 (CN)**

• **LIANG, Yu**
**Nanjing, Jiangsu 210023 (CN)**
• **LI, Xuejian**
**Nanjing, Jiangsu 210023 (CN)**
• **SHEN, Furao**
**Nanjing, Jiangsu 210023 (CN)**
• **LIU, Jia**
**Nanjing, Jiangsu 210023 (CN)**
• **ZHANG, Xiaocong**
**Nanjing, Jiangsu 210023 (CN)**

(74) Representative: **Hanna Moore + Curley**
**Garryard House**
**25/26 Earlsfort Terrace**
**Dublin 2, D02 PX51 (IE)**

(54) **OBSTACLE RECOGNITION METHOD FOR LIBRARY ROBOT BASED ON DEPTH IMAGE**

(57)     The disclosure discloses a method for detecting an obstacle based on a depth image. The method includes: step 1, choosing the pixels corresponding to a certain distance range from the collected image; step 2, denoising the image and smoothing the edges by using an erosion and expansion operation; step 3, conducting edge detection by a convolution operation; step 4, finding out the bookshelf plane, and drawing a dividing line; step 5, finding out the plane of a protruding book according to a convolution result; and step 6, filtering out the regions with a small area, and judging if there is an obstacle in the regions with large areas.

Fig. 1

**Description**

**Technical Field**

The disclosure relates to an image processing method for detecting an obstacle based on a depth image, in particular to a digital image processing method for detecting protruding books on a library bookshelf.

**Background Art**

In recent years, with the rapid development of computer vision and computer science and technology, more and more researchers are engaged in the research of robot vision. The application of a robot vision system to mobile robots also attracts more and more attention and shows a good development prospect, and the research on obstacle detection has become one of hot spots in many applications, and has achieved abundant accomplishments. However, there is no good way to detect the protruding books on a bookshelf in the moving process of a library robot.

At present, there are two types of methods in obstacle detection at home and abroad: the obstacle detection method based on LiDAR and the obstacle detection method based on computer vision. Compared with the LiDAR sensor, the vision sensor is low-cost, has strong adaptability to complex environment, and is not prone to being affected by environment or obstacle shapes. Besides, the vision sensors can obtain the image signals of environment information, which contain a lot of image information and have great advantages in describing the broadness and integrity of a target.

The method based on edge information and the method based on stereo vision are widely applied in obstacle detection, and both have good performance. The edge is a basic image feature and has rich information, which can separate the obstacle from the background. But the method based on edge information performs poorly when the colors of the obstacle and the background are very close or the lighting is too dark. The method based on stereo vision can obtain three-dimensional information from a two-dimensional image, but suffers from expensive computation cost and the complexity of the features matching.

The existing obstacle detection algorithms are not applicable to the detection of the protruding books on the bookshelf in the moving process of the library robot. For RGB images, it is difficult to distinguish the protruding books from the bookshelf and the adjacent books, because the colors are so close. As a result, the edge features are not suitable to solve this kind of problem.

**Summary of the Invention**

Objectives of the disclosure: the disclosure aims to overcome the weakness that the existing edge detection algorithms cannot effectively detect the protruding books on a library bookshelf, and to solve the problem that the existing detection method based on stereo vision is running in a low speed. The disclosure processes the depth image, detects the edges and determines whether an obstacle is encountered to improve the algorithm performance.

In order to solve the above technical problems, the disclosure discloses a library robot obstacle detection method based on a depth image. The method can be used in the obstacle detection, a library robot, image processing and other applications, which includes the following steps,

> step 1, choosing the pixels corresponding to a certain distance range, wherein in practice, the pixel values are between 40 and 60;
> step 2, denoising the image and smoothing the image edges by the opening operation in morphology, which includes erosion and dilation
> step 3, conducting edge detection by a convolution operation;
> step 4, finding out the bookshelf plane and drawing a dividing line;
> step 5, finding out the plane of a protruding book according to a convolution result;
> step 6, filtering out the regions with a small area, and judging if there is an obstacle in the regions with large areas.

In step 1, the parameter is set to choose the pixels of which the pixel value is from 40 to 60 corresponding to a certain distance range

In step 2, the image is denoised, and the image edges are smoothed.

In step 3, the convolution operation is conducted by adopting a following convolution formula,

$$f[x, y] * g[x, y] = \sum_{n_1 = -\infty}^{\infty} \sum_{n_2 = -\infty}^{\infty} f[n_1, n_2] \cdot g[x - n_1, y - n_2],$$

where the x and y represent the row number and the column number of a pixel in the image respectively. f represents a function of the original two-dimensional image. g represents the function of a convolution kernel, of which the size is usually much smaller than that of the original image. $n_1$ and $n_2$ represent a position in the image range. The convolution operation refers to covering the center of the convolution kernel on each pixel of image and then conducting the point multiplication operation. After the absolute value is normalized, it is assigned to the pixel. In order to extract the image edge and determine a plane, a Sobel convolution kernel is adopted, where $g = \begin{bmatrix} -1 & 0 & 1 \\ -2 & 0 & 2 \\ -1 & 0 & 1 \end{bmatrix}$.

In step 4, the bookshelf plane is found out through a following method, in the depth image in step 1, the average column number of the region with a maximum gradient is the bookshelf plane.

In step 5, the result obtained in step 3 is utilized, because the pixel value of the plane will be close to 0 after the convolution operation. The threshold parameter dep_threshold is set, and the pixel with the value less than dep_threshold is considered as a plane.

In step 6, filtering out the regions with the small area, and judging if there is an obstacle in the regions with large areas, which includes the following steps:

step 6-1, finding connected regions through a plane result obtained in step 5 according to neighborhoods;
step 6-2, setting the area threshold parameter area_thre;
step 6-3, choosing the first connected region and skipping to step 6-4;
step 6-4, for the connected region, counting the area of the connected region. If the area is less than the threshold parameter area_thre, the connected region is deleted, the next connected region is taken and the flow skips to step 6-4. If each of the connected regions is determined, stop = 0, indicating that there is no obstacle and the step 6 is ended. If the area of the connected region is larger than the area threshold parameter area_thre, the flow skips to step 6-5;
step 6-5, calculating a distance col_ave of the book protruding from the bookshelf, and setting a threshold parameter col_thre. When the distance is larger than the threshold parameter col_thre, stop = 1, indicating that there is an obstacle book and step 6 is ended. Otherwise, the next connected region is taken, and the flow skips to step 6-4. If each of the connected regions is determined, then stop = 0, and step 6 is ended.

Beneficial effects: the disclosure has the remarkable advantages that the detection result is very good when it is very difficult to distinguish the protruding books from the bookshelf background and the adjacent books. The plane is found out by adopting the convolution operation and the algorithm runs in a high speed, so it is suitable for processing images obtained in real time in the moving process of the robot. Meanwhile, the result is also very accurate, and thus the algorithm performance is improved.

**Brief Description of the Drawings**

The disclosure is further specifically described in combination with the drawings and the detailed description, and the advantages of the above and/or other aspects of the disclosure will become clearer.

FIG. 1 is a flow diagram of obstacle detection of the disclosure.
FIG. 2 is a flow diagram of judging whether to stop or not according to a normalized convolution result in the disclosure.
FIG. 3 is an intermediate result diagram of the disclosure.

**Detailed Description of the Invention**

In order to make the object, technical solution and advantages of the disclosure clearer, this chapter makes a further detailed description of the disclosure in combination with the accompanying drawings.

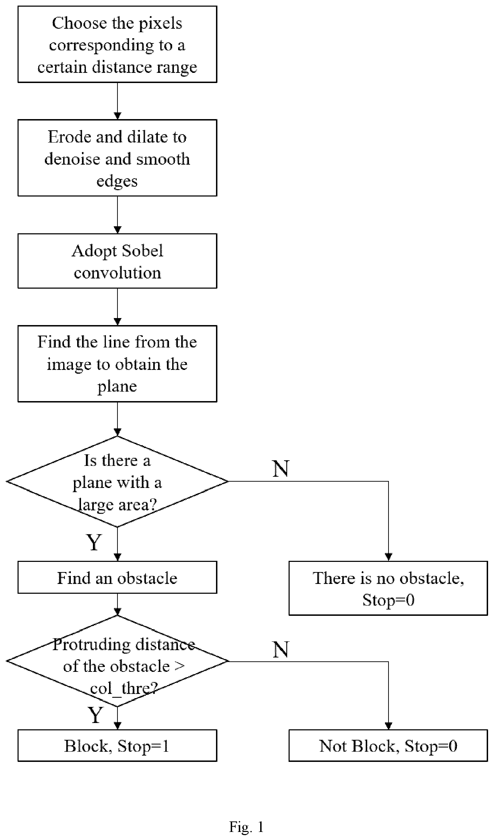

FIG. 1 is a flow diagram of obstacle detection of the disclosure, and includes 6 steps.

In the first step, the pixels corresponding to a certain distance range is chosen, wherein in practice, the pixel values are between 40 and 60.

In the second step, the image is denoised and the image edges are smoothed by the opening operation in morphology, which includes erosion and dilation.

In the third step, a convolution operation is conducted by adopting a following convolution formula:

$$f[x, y] * g[x, y] = \sum_{n_1=-\infty}^{\infty} \sum_{n_2=-\infty}^{\infty} f[n_1, n_2] \cdot g[x - n_1, y - n_2],$$

where f represents a function of the original two-dimensional image. g represents the function of a convolution kernel, of which the size is usually much smaller than that of the original image. $n_1$ and $n_2$ represent a position in the image range. The convolution operation refers to covering the center of the convolution kernel on each pixel of image and then conducting the point multiplication operation. After the absolute value is normalized, it is assigned to the pixel.

The convolution operation is one of the most important methods in edge detection, and plays an important role in the fields of information technology such as machine learning, digital media and computer vision.

At present, many convolution kernels have been widely used, here, in order to extract an edge and determine a plane, the Sobel convolution kernel is used to process images, which includes horizontal and vertical matrix respectively. Then conduct the convolution operation using the two Sobel convolution kernel with the image, so that horizontal and vertical edges can be detected respectively. If A represents an original image and Gx and Gy represent images subjected to horizontal and vertical edge detection respectively, a formula is

$$\text{Gx} = \begin{bmatrix} -1 & 0 & 1 \\ -2 & 0 & 2 \\ -1 & 0 & 1 \end{bmatrix} * A \qquad\qquad \text{Gy} = \begin{bmatrix} 1 & 2 & 1 \\ 0 & 0 & 0 \\ -1 & -2 & -1 \end{bmatrix} * A$$

In the disclosure, a gradient result is obtained by using Gx, and an absolute value is taken and normalized to find out the vertical edge of the image.

In the fourth step, a bookshelf plane is found out through a following method: in an original depth image, the average column number of the region with a maximum gradient is the bookshelf plane.

In the fifth step, the result obtained in the step 3 is utilized, if it is a plane, the pixel value is close to 0 after convolution normalization. The threshold parameter dep_threshold is set, and the plane is determined when the pixel value is less than dep_threshold.

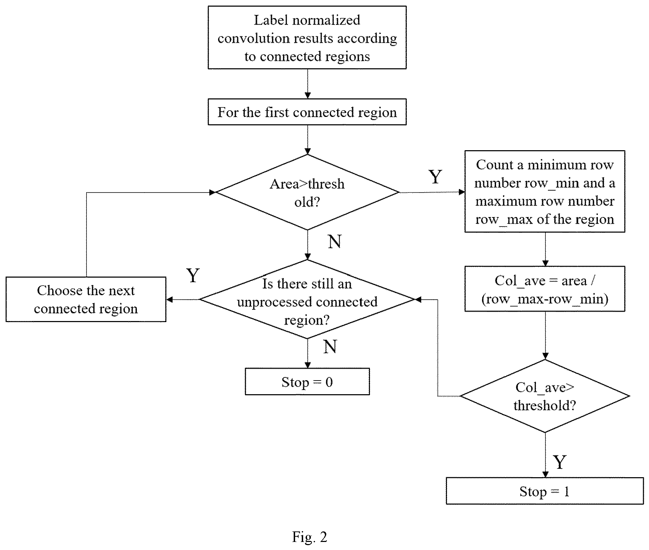

In the sixth step, the regions with a small area are filtered out, and judging if there is an obstacle in the regions with large areas. The flow diagram of this process is shown in FIG. 2, and includes the following steps.

Step 6-1, connected regions are found through a plane result obtained in step 5 according to neighborhoods, that is, for a pixel located at (x, y), wherein x and y represent a row number and a column number of the pixel in the image respectively, if there is a pixel with a pixel value not equal to 0 at the neighborhood position, the pixel is adjacent to the previous pixel, and is in the same connected region.

Step 6-2, an area threshold parameter area_thre is set.

Step 6-3, the first connected region is chosen and the flow skips to step 6-4.

Step 6-4, for the connected region, the area of the connected region is counted. If the area is less than the threshold parameter area_thre, the connected region is deleted, the next connected region is taken, and the flows skips to step 6-4. If each of the connected regions is determined, stop = 0, indicating that there is no obstacle and step 6 is ended. If the area of the connected region is larger than the area threshold parameter area_thre, the flow skips to step 6-5.

Step 6-5, a distance col_ave of the book protruding from the bookshelf is calculated, and a threshold parameter col_thre is set. When the distance is larger than the threshold parameter col_thre, stop = 1, indicating that there is an obstacle book and step 6 is ended. Otherwise, the next connected region is taken, the flow skips to step 6-4. If each of the connected regions is determined, then stop = 0, and step 6 is ended.

If the area of a possible plane finally found is less than a certain value, it means that the obstacle will not block the advancing process of the robot, at the same time, if the area is larger than the value, and on average, the number of columns occupied by the obstacle is less than a certain value, it means that the book protruding distance is very small, and it will not block the advancing process of the robot.

**Embodiment**

In order to verify the effectiveness of the algorithm, experiments are conducted on 8 video clips from the real environment, including 5 clips that robots will not hit and 3 clips that robots may hit. Each frame in these video clips is processed to judge whether the robot should stop or not.

These 8 video clips are taken as an example, for each frame in the video clips, whether the robot encounters an obstacle is judged according to the steps as follows.

1. The depth image is transformed into gray-scale, and the pixels corresponding to a certain distance range is chosen. The gray-scale value in the depth image represents the distance between the object and the camera, then the image is processed, and part of a region where an obstacle is impossible to appear is removed.

2. The image is denoised and the image edges are smoothed by the opening operation in morphology.

3. The image is subjected to the convolution operation, and after convolution, an absolute value is normalized.

4. A bookshelf plane is found out through a following method: in the depth image in step 1, the average column number of the region with a maximum gradient is the bookshelf plane.

5. According to a normalized result obtained in step 3, the threshold parameter dep_threshold is set, in a convolution result, the part with the pixel value less than dep_threshold is the possible plane.

6. For the plane formed by the pixels in each neighborhood, firstly, whether the area of the plane is larger than the area threshold parameter area_thre or not is judged, then whether the number of columns that the plane occupies is larger than the threshold parameter col_thre or not is judged, if both are yes, for this image, it is determined that the robot should stop.

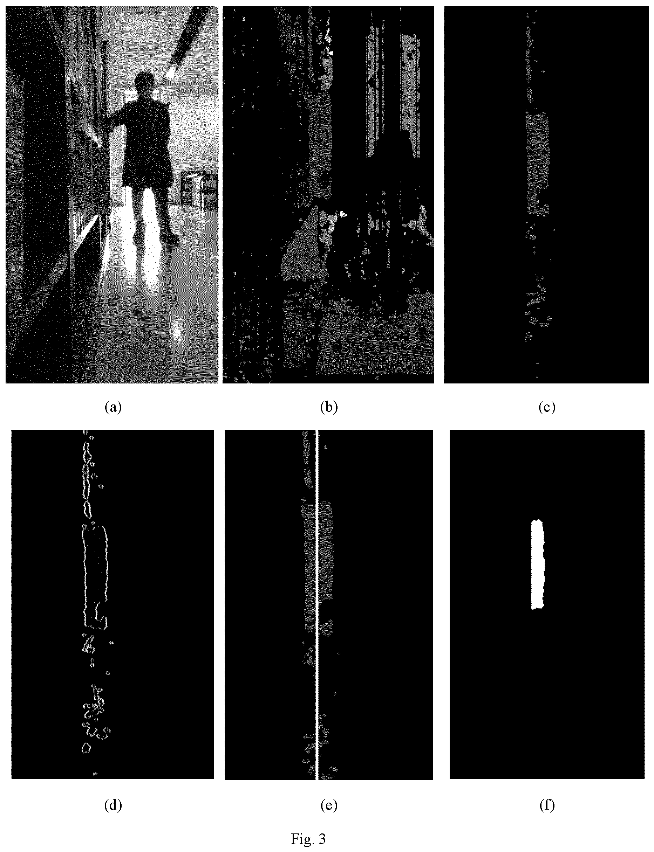

In FIG. 3, an intermediate result diagram of an obstacle detection algorithm for an image is shown, where (a) in FIG. 3 is an original RGB image, (b) in FIG. 3 is a result of the depth image after choosing a certain distance, (c) in FIG. 3 is a diagram after denoising, (d) in FIG. 3 is a convolution result diagram, (d) in FIG. 3 is a boundary region diagram according to the convolution result, (e) in FIG. 3 is the found bookshelf plane, and (f) in FIG. 3 is the final plane result where a book may protrude. The experiments can show that both the accuracy and speed of the disclosure are satisfactory.

The disclosure provides a method for detecting the obstacle based on a depth image, there are many methods and ways to implement the technical solution, and the above is only a preferred implementation of the disclosure. It should be noted that for those of ordinary kill in the art, without departing from the principles of the disclosure, several improvements and retouches can also be made, and these improvements and retouches should also be regarded as the scope of protection of the disclosure. The components that are not clear in this embodiment can be implemented with the existing technology.

**Claims**

1. A library robot obstacle detection method based on a depth image, comprising the following steps:

   step 1, choosing the pixels corresponding to a certain distance range from the collected image;
   step 2, denoising the image and smoothing the edges;
   step 3, conducting edge detection by a convolution operation;
   step 4, finding out the bookshelf plane and drawing a dividing line;
   step 5, finding out the plane of a book protruding from a bookshelf according to a convolution result; and
   step 6, filtering out the regions with an area less than a threshold parameter area_thre, and judging if there is an obstacle in the regions with large areas.

2. The method according to claim 1, wherein in step 1, a parameter is set to choose the pixels of which the pixel value is from 40 to 60 corresponding to a certain distance range.

3. The method according to claim 2, wherein in step 2, the image is denoised and the image edges are smoothed by the opening operation in morphology, which includes erosion and dilation.

4. The method according to claim 3, wherein in step 3, the convolution operation is conducted by adopting a following convolution formula,

$$\mathrm{f}[x,y] * \mathrm{g}[x,y] = \sum_{n_1=-\infty}^{\infty} \sum_{n_2=-\infty}^{\infty} f[n_1, n_2] \cdot \mathrm{g}[x - n_1, y - n_2],$$

wherein x and y represent the row number and the column number of a pixel in the image respectively, f represents a function of the original two-dimensional image, g represents the function of a convolution kernel, and $n_1$ and $n_2$ represent a position in the image range.

5. The method according to claim 4, wherein in step 4, the bookshelf plane is found out through a following method: in the depth image in step 1, an average column number of the region with a maximum gradient is the bookshelf plane.

6. The method according to claim 5, wherein in step 5, the result obtained in step 3 is utilized to set a threshold parameter dep_threshold, and the plane is determined when a pixel value is less than dep_threshold.

7. The method according to claim 6, wherein in step 6, filtering out the region with the area less than the threshold parameter area_thre, and judging if there is an obstacle in the regions with large areas, comprises the following steps:

step 6-1, finding connected regions through a plane result obtained in step 5 according to neighborhoods;

step 6-2, setting the area threshold parameter area_thre;

step 6-3, choosing the first connected region and skipping to step 6-4;

step 6-4, for the connected region, counting the area of the connected region, wherein if the area is less than the threshold parameter area_thre, the connected region is deleted, and step 6-5 is conducted; and if the area of the connected region is larger than the area threshold parameter area_thre, the flow skips to step 6-6;

step 6-5, taking a next connected region, wherein if each of the connected regions is determined, it is determined that there is no obstacle, step 6 is ended, and if not, the flow returns to step 6-4; and

step 6-6, calculating a distance col_ave of the book protruding from the bookshelf, and setting a threshold parameter col_thre, wherein when the distance is larger than the threshold parameter col_thre, it is determined that there is an obstacle book, and step 6 is ended; otherwise, taking the next connected area and skipping to step 6-4, wherein if each of the connected regions is determined, it is determined that there is no obstacle, and step 6 is ended.

```
┌─────────────────────┐
│   Choose the pixels  │
│  corresponding to a  │
│ certain distance range│
└─────────────────────┘
          │
          ▼
┌─────────────────────┐
│   Erode and dilate to│
│  denoise and smooth  │
│        edges         │
└─────────────────────┘
          │
          ▼
┌─────────────────────┐
│    Adopt Sobel       │
│    convolution       │
└─────────────────────┘
          │
          ▼
┌─────────────────────┐
│  Find the line from  │
│   the image to obtain│
│       the plane      │
└─────────────────────┘
          │
          ▼
```

Is there a plane with a large area? — N → There is no obstacle, Stop=0

Y

Find an obstacle

Protruding distance of the obstacle > col_thre? — N → Not Block, Stop=0

Y

Block, Stop=1

Fig. 1

Fig. 2

(a)

(b)

(c)

(d)

(e)

(f)

Fig. 3

<table>
<tr><td colspan="2" align="center">**INTERNATIONAL SEARCH REPORT**</td><td colspan="2">International application No.<br><br>**PCT/CN2019/082717**</td></tr>
</table>

| A. | CLASSIFICATION OF SUBJECT MATTER |
|---|---|

G06K 9/00(2006.01)i

According to International Patent Classification (IPC) or to both national classification and IPC

| B. | FIELDS SEARCHED |
|---|---|

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNABS; CNTXT; DWPI; VEN; USTXT; EPTXT; WOTXT; CNKI: 图书馆, 书, 机器人, 识别, 检测, 深度, 卷积, 边缘, 障碍, 平面, 面积, library, book, robort, recognition, detect, depth, convolution, edge, obstacle, plane, area

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 109101874 A (NANJING UNIVERSITY) 28 December 2018 (2018-12-28)<br>entire document | 1-7 |
| A | CN 106096559 A (SHENZHEN ZERO INTELLIGENT ROBOT TECHNOLOGY CO., LTD.)<br>09 November 2016 (2016-11-09)<br>description, paragraphs [0003]-[0046] | 1-7 |
| A | CN 104318206 A (NEUSOFT CORPORATION) 28 January 2015 (2015-01-28)<br>description, paragraphs [0009]-[0067] | 1-7 |
| A | CN 107397658 A (CHENGDU KUAIYAN TECHNOLOGY CO., LTD.) 28 November 2017<br>(2017-11-28)<br>entire document | 1-7 |
| A | US 2017308760 A1 (SAMSUNG SDS CO., LTD.) 26 October 2017 (2017-10-26)<br>entire document | 1-7 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 July 2019** | **19 July 2019** |

| Name and mailing address of the ISA/CN | Authorized officer |
|---|---|
| **National Intellectual Property Administration, PRC (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2019/082717**

| Patent document cited in search report | | | Publication date (day/month/year) | Patent family member(s) | | | Publication date (day/month/year) |
|---|---|---|---|---|---|---|---|
| CN | 109101874 | A | 28 December 2018 | None | | | |
| CN | 106096559 | A | 09 November 2016 | None | | | |
| CN | 104318206 | A | 28 January 2015 | CN | 104318206 | B | 29 September 2017 |
| CN | 107397658 | A | 28 November 2017 | None | | | |
| US | 2017308760 | A1 | 26 October 2017 | KR | 20170121933 | A | 03 November 2017 |

Form PCT/ISA/210 (patent family annex) (January 2015)